# DEMANDE DE BREVET EUROPEEN

(11) **EP 1 081 873 A1**
(43) Date de publication de la demande: **07.03.2001**
(21) Numéro de dépôt: 00410102.8
(22) Date de dépôt: 29.08.2000
(51) Int. Cl.: H04B 1/58

(54) **Transformateur asymétrique pour ligne téléphonique**

(30) Priorité: 30.08.1999 FR 9910989
(71) Demandeur: STMicroelectronics SA, 94250 Gentilly Cedex (FR)
(72) Inventeur: Prat, Gildas, 38100 Grenoble (FR); Chianale, Alain, 38120 Saint Egrève (FR)
(74) Mandataire: de Beaumont, Michel

(57) **Abrégé**

L'invention concerne un transformateur asymétrique (7') entre une ligne bifilaire et un équipement d'émission-réception, comprenant : côté ligne, au moins un enroulement primaire (10) d'un premier nombre de spires ; et côté équipement, au moins trois enroulements secondaires (20, 21, 22) en série et dont les nombres de spires respectifs sont fonction des rapports de transformation souhaités en émission et en réception.

## Description

La présente invention concerne les transformateurs utilisés sur des lignes de transmission (par exemple, téléphoniques) et, plus précisément, aux extrémités de ces lignes, que ce soit côté équipement utilisateur ou côté équipement collectif (par exemple, un central téléphonique ou un serveur de réseau de type Internet). L'invention concerne, plus particulièrement, les transformateurs de ligne prévus dans des circuits hybrides 2 fils-4 fils qui sont destinés à permettre l'envoi et la réception d'un signal utile sur une même ligne de transmission. On retrouve ce genre de transformateur dans tout équipement, raccordé sur une ligne téléphonique et destiné à émettre et recevoir un signal utile, qu'il s'agisse de combinés téléphoniques destinés à la transmission de la parole ou de modems destinés à l'échange de données numériques en utilisant le réseau téléphonique comme support de transmission.

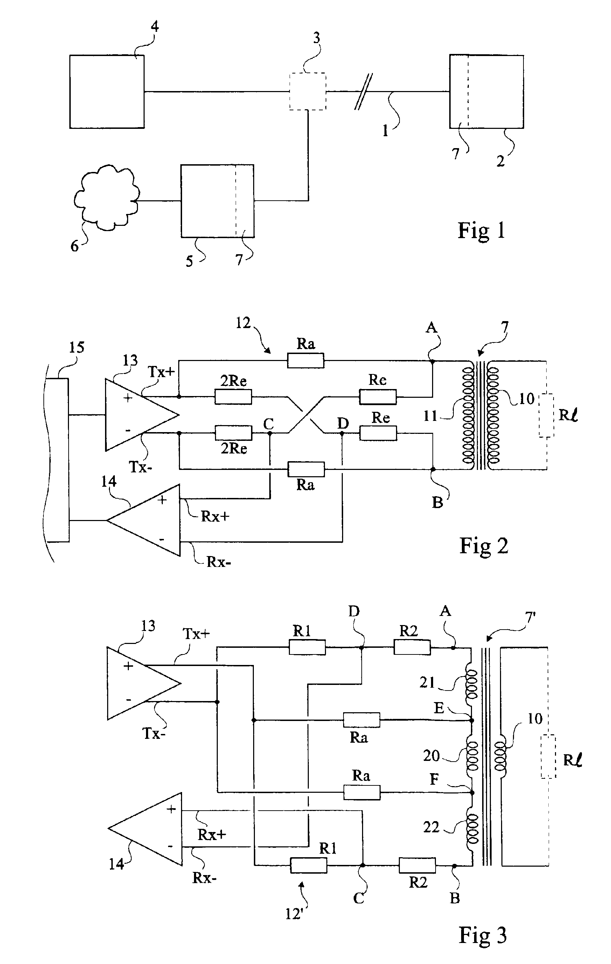

La figure 1 représente, de façon très schématique et simplifiée, le raccordement de différents équipements sur une ligne téléphonique 1 et, plus précisément, le raccordement d'équipements côté abonné. La ligne 1 est généralement une ligne bifilaire entre un central téléphonique 2 et un élément 3 de raccordement côté abonné. Pour simplifier, on considère un central téléphonique 2, mais on notera que la ligne transite par différents équipements collectifs de type sous-répartiteurs, répartiteurs, etc. Côté abonné, l'élément de raccordement 3 peut être constitué d'un séparateur chargé d'aiguiller la ligne téléphonique soit vers un combiné téléphonique 4, soit vers un modem 5 raccordé à un équipement numérique 6, par exemple un micro-ordinateur. D'autres configurations que celle décrite ci-dessus peuvent, bien entendu, exister côté abonné et côté système collectif. Toutefois, leur exposé détaillé n'apporterait rien de plus à l'exposé de l'invention et sera par conséquent omis pour être parfaitement connu.

Côté central 2 et côté modem 5, il est nécessaire de disposer d'un système d'interface entre la ligne téléphonique et les circuits de traitement, généralement numérique, des données. Cette interface de ligne constitue une partie particulièrement critique car elle ne peut pas être intégrée. C'est dans cette interface que l'on retrouve le circuit hybride comprenant le transformateur de ligne 7 auquel s'applique l'invention.

L'invention s'applique plus particulièrement aux transformateurs de ligne utilisés dans le cadre de liaisons numériques à haut débit et, plus précisément, pour des lignes d'abonné numériques et asymétriques (ADSL). Par conséquent, à la figure 1, le modem 5 constitue un terminal ADSL.

Une particularité des liaisons asymétriques est que le débit de données est différent selon le sens de transmission, c'est-à-dire selon que les données sont transmises depuis l'abonné vers un système collectif ou depuis ce système collectif vers l'abonné. Plus précisément, et bien que cela n'ait pas été représenté à la figure 1 pour des raisons de clarté, on retrouve à l'autre extrémité de la ligne utilisée, un serveur de données (par exemple, un serveur Internet) qui possède également un transformateur de ligne. A la figure 1, on a considéré que le central 2 avait besoin de traiter les données et avait par conséquent besoin d'un transformateur de ligne. Par simplification extrême, on peut considérer que le bloc 2 de la figure 2 constitue le serveur collectif de la liaison ADSL sur laquelle est branché le modem 5.

Dans de tels systèmes asymétriques, le débit de données est, par exemple, de l'ordre de 500 kilobits par seconde dans le sens "montant", c'est-à-dire de l'usager vers le serveur, et de l'ordre de 1,5 à 6 mégabits par seconde dans le sens descendant, c'est-à-dire du réseau vers l'usager.

Le transformateur de ligne asymétrique prévu, côté abonné (ou côté serveur), sert à réduire la tension entre la ligne et les équipements de traitement de données. En effet, les tensions de ligne sont souvent incompatibles avec les tensions que peuvent supporter les circuits de traitement des données. Des transformateurs de ligne sont également présents dans de simples combinés téléphoniques pour les mêmes raisons. Dans ce cas, les débits sont cependant symétriques.

La présence des transformateurs de ligne conduit à une élévation de la tension pour l'émission (sens équipement vers ligne) et à une diminution de tension pour la réception (sens ligne vers équipement). Le rapport d'élévation ou de diminution de la tension est lié au rapport de transformation du transformateur utilisé.

Dans le cadre d'une transmission à haut débit asymétrique, le signal à transmettre est de niveau élevé et le signal reçu présente un niveau très faible (surtout pour des lignes longues conduisant à une forte atténuation). Dans le sens de l'émission, l'augmentation de tension opérée par le transformateur est compatible avec les besoins des transmissions à haut débit qui requièrent une puissance d'émission élevée pour dépasser les niveaux de bruit.

Par contre, dans le sens de la réception, l'atténuation opérée par le transformateur de ligne est préjudiciable au fonctionnement du système. En effet, le récepteur des signaux doit alors présenter, en entrée, une source de bruit de niveau très faible, ce qui rend sa réalisation délicate. La tension de bruit, en entrée du récepteur, doit être d'autant plus faible que la tension est faible aux bornes du transformateur (de l'enroulement situé côté équipement).

La figure 2 représente un exemple classique de circuit hybride entre des têtes d'émission-réception d'un modem. La ligne téléphonique en aval du transformateur 7 a été symbolisée par une résistance de ligne RL (représentée en pointillés) connectée en parallèle sur l'enroulement primaire 10 du transformateur 7, défini arbitrairement comme étant l'enroulement côté ligne. Côté enroulement secondaire 11, on trouve généralement un circuit 12 d'adaptation d'impédance et d'annulation d'écho avant les têtes d'émission 13 et de réception 14 symbolisées en figure 2 par leurs éléments terminaux qui sont constitués d'amplificateurs différentiels. Les têtes d'émission-réception sont généralement constituées d'amplificateurs à faible bruit (LNA). L'entrée de la tête d'émission 13 et la sortie de la tête de réception 14 sont reliées à un système 15 de traitement qui ne fait pas l'objet de la présente invention et ne sera, par conséquent, pas détaillé.

Le circuit 12 d'adaptation d'impédance et d'annulation d'écho est généralement essentiellement constitué d'impédances montées de façon adéquate pour les fonctions souhaitées qui seront exposées ci-dessous. Pour l'annulation d'écho, ces impédances sont généralement appelées impédances de compromis, et sont dimensionnées pour respecter les contraintes d'un lot de lignes caractéristiques. Il s'agit, le plus souvent, d'impédances RC. Cependant, pour les besoins du présent exposé, et par souci de simplification, le circuit 12 sera considéré comme purement résistif.

Ainsi, en transmission, chaque sortie Tx+ et Tx- de la tête 13 est reliée à une des bornes de l'enroulement secondaire 11 du transformateur 7 par l'intermédiaire d'une résistance Ra, dite résistance d'attaque en transmission. Ces résistances Ra constituent la partie adaptation d'impédance du circuit 12. Dans le sens de la réception, les bornes d'entrée Rx+ et Rx- de la tête 14 ne peuvent pas être directement reliées aux bornes A, B de l'enroulement secondaire 11 sauf à accepter une pollution importante du signal par l'écho de la transmission. Par conséquent, on utilise un circuit d'annulation d'écho. Ce circuit est, de façon simplifiée, constitué de paires de résistances Re et 2Re associées en série entre les bornes A et Tx- et entre les bornes B et Tx+. Les bornes Rx+ et Rx- sont reliées aux points milieux C et D de ces associations en série.

Dans un circuit classique tel qu'illustré par la figure 2, les valeurs respectives des résistances sont telles que les résistances 2Re entre les bornes Tx+ et D et entre les bornes Tx- et C correspondent au double des résistances Re entre les bornes D et B et entre les bornes C et A. Cela est nécessaire pour retrouver, aux points C et D, les données transmises devant être soustraites pour réaliser la fonction d'annulation d'écho. En effet, entre les bornes A et B, la tension correspond à la somme des tensions de transmission et de réception. L'annulation d'écho opérée par le circuit d'adaptation 12 consiste à soustraire la tension de transmission de la tension aux bornes A et B pour obtenir, aux bornes C et D, uniquement la tension de réception.

La transmittance en émission d'un circuit 12 tel qu'illustré par la figure 2 est de 1/2, c'est-à-dire que la moitié de la tension délivrée par la tête d'émission 13 est perdue par le réseau d'adaptation. Dans le sens de l'émission, cela n'est cependant pas critique dans la mesure où le transformateur 7 a précisément pour rôle, par son rapport de transformation (N), d'augmenter la tension transmise sur la ligne. Dans le sens de l'émission, la valeur de la résistance d'attaque Ra dépend de la résistance équivalente RL de la ligne et du rapport de transformation N en émission (nombre de spires de l'enroulement primaire 10 / nombre de spires de l'enroulement secondaire 11). Cette valeur est de RL/2N².

La transmittance en réception d'un circuit 12 tel qu'illustré par la figure 2 est de 2/3. De plus, dans ce sens, la transmittance du transformateur n'est que de 1/N.

On voit donc que le faible niveau de la source de bruit en réception, imposé dans le cas d'un transformateur de ligne asymétrique prévu pour des transmissions à haut débit, doit non seulement tenir compte du rapport de transformation du transformateur mais également de l'atténuation supplémentaire liée au circuit d'annulation d'écho.

La présente invention vise à pallier les inconvénients des transformateurs connus.

Plus précisément, l'invention vise à proposer un nouveau transformateur de ligne asymétrique qui permette de rendre moins critique le problème de bruit en réception. L'invention vise, en particulier, à permettre, par rapport à un transformateur classique, une augmentation du niveau du signal reçu sans nuire à l'augmentation du signal transmis opérée par le transformateur de ligne.

La présente invention vise également à proposer un nouveau circuit hybride, particulièrement adapté aux transmissions de données asymétriques.

Une caractéristique de la présente invention est de prévoir une élévation de tension dans le sens de l'émission sans diminuer la tension dans le sens de la réception. Ainsi, l'invention prévoit un rapport de transformation différent selon le sens de transmission.

Une première solution serait de prévoir des transformateurs d'émission et de réception distincts pour ne prévoir un rapport de transformation différent de 1 que pour le transformateur d'émission.

Toutefois, une telle solution dans un transformateur de ligne d'un circuit hybride 2 fils-4 fils rendrait particulièrement complexe le circuit d'annulation d'écho. Par conséquent, les inventeurs considèrent qu'une telle solution de dédoublement des transformateurs conduirait, au moins pour la partie annulation d'écho, à accumuler les défauts.

La présente invention vise donc à proposer une solution qui ne rende pas plus complexe le circuit d'annulation d'écho prévu entre le transformateur et les têtes d'émission-réception du modem.

Plus précisément, la présente invention prévoit un transformateur asymétrique entre une ligne bifilaire et un équipement d'émission-réception, qui comprend :
- côté ligne, au moins un enroulement primaire d'un premier nombre de spires ; et
- côté équipement, au moins trois enroulements secondaires en série et dont les nombres de spires respectifs sont fonction des rapports de transformation souhaités en émission et en réception.

Selon un mode de réalisation de la présente invention, un signal d'émission est appliqué aux bornes d'un enroulement secondaire central, un signal de réception étant prélevé aux bornes d'extrémité de l'association en série des enroulements secondaires.

Selon un mode de réalisation de la présente invention, l'enroulement secondaire central comporte un nombre de spires fonction du rapport de transformation souhaité en émission.

Selon un mode de réalisation de la présente invention, deux enroulements secondaires d'extrémité comportent un nombre de spires choisi pour obtenir, en réception, un rapport de transformation supérieur ou égal à l'unité.

Selon un mode de réalisation de la présente invention, les rapports entre le nombre de spires de chaque enroulement d'extrémité et le nombre de spires de l'enroulement primaire sont égaux à (N-1)/2N, où N représente le rapport entre le nombre de spires de l'enroulement primaire et le nombre de spires de l'enroulement secondaire central.

L'invention prévoit également un circuit hybride de conversion 2 fils-4 fils entre une ligne de transmission bifilaire et des têtes d'émission et de réception d'un modem, comprenant un circuit d'adaptation d'impédance et d'annulation d'écho, et un transformateur de ligne.

Selon un mode de réalisation de la présente invention, la transmittance en réception du circuit hybride est de 2/(N+2).

Selon un mode de réalisation de la présente invention, le circuit hybride comporte, entre chaque borne d'extrémité de l'association en série des enroulements secondaires du transformateur et une de deux bornes d'entrée de la tête de réception, une première impédance, ladite borne d'entrée étant reliée, par une deuxième impédance, à une de deux bornes de sortie de la tête d'émission, et le rapport entre les valeurs des première et deuxième impédances étant égal à la moitié du rapport entre les nombres de spires respectifs des enroulements primaire et secondaire central.

Selon un mode de réalisation de la présente invention, le circuit hybride est intégré dans un terminal de ligne d'abonné numérique asymétrique.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2 qui ont été décrites précédemment sont destinées à exposer l'état de la technique et le problème posé ; et
la figure 3 représente un transformateur de ligne selon un mode de réalisation de la présente invention, associé à un circuit d'adaptation d'impédance et d'annulation d'écho entre ce transformateur et des têtes d'émission-réception.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, les circuits d'annulation d'écho ont été représentés de façon simplifiée par des résistances. On notera cependant que, en pratique, il s'agit de circuits d'impédances de compromis. De plus, les circuits de génération des signaux transmis et d'exploitation des signaux reçus n'ont pas été décrits et ne font pas l'objet de la présente invention.

Une caractéristique de la présente invention est de prévoir un transformateur comprenant, côté ligne, au moins un enroulement et, côté équipement, au moins trois enroulements en série dont les nombres de spires respectifs sont fonction des rapports de transformation souhaités en émission et en réception.

Par conséquent, selon l'invention, on dissocie les rapports de transformation en transmission et en réception tout en préservant le recours à un transformateur unique.

Le nombre de trois enroulements choisi par l'invention est lié à la transformation 2 fils-4 fils opérée entre la ligne et les têtes d'émission-réception.

La figure 3 représente, de façon très schématique, un mode de réalisation d'un transformateur de ligne 7' asymétrique selon l'invention, associé à un circuit 12' d'adaptation d'impédance et d'annulation d'écho. Il s'agit donc d'un mode de réalisation d'un circuit hybride asymétrique selon l'invention.

Comme précédemment, le circuit d'adaptation d'impédance et d'annulation d'écho est relié, d'une part à des têtes d'émission 13 et de réception 14 classiques et, d'autre part, au transformateur 7'. Toujours de façon classique, l'enroulement primaire 10 du transformateur est relié aux deux fils de la ligne téléphonique symbolisée par une résistance de ligne RL (représentée en pointillés). La tête d'émission 13 présente deux bornes Tx+ et Tx- de sortie différentielles tandis que la tête de réception 14 comporte deux bornes Rx+ et Rx- d'entrée différentielles. Les circuits respectifs en amont de la tête 13 et en aval de la tête 14 n'ont pas été représentés en figure 3. Il s'agit de circuits classiques.

Selon le mode de réalisation de la figure 3, le secondaire du transformateur 7' comporte trois enroulements 20, 21, 22 en série. Un premier enroulement central 20 comporte un nombre de spires choisi, selon l'invention, en fonction de l'élévation de tension souhaitée en émission. Par exemple, pour retrouver, en émission, un rapport de transformation de N comme dans le cas classique exposé précédemment, le rapport entre le nombre de spires de l'enroulement primaire 10 et le nombre de spires de l'enroulement secondaire central 20 est N.

Les enroulements 21 et 22 sont situés de part et d'autre de l'enroulement 20 et leurs nombres de spires respectifs sont choisis, de préférence, pour qu'il n'y ait pas de diminution de tension en réception. Par conséquent, le rapport de transformation entre l'enroulement secondaire (enroulements 21, 20 et 22 en série) et l'enroulement 10 est, de préférence, unitaire, de façon à ce que la tension aux bornes A, B d'extrémité du secondaire du transformateur 7' corresponde à la tension de la ligne non-atténuée. De préférence, les enroulements 21 et 22 ont un même nombre de spires. Par conséquent, le rapport entre le nombre de spires de chaque enroulement 21 et 22 et le nombre de spires de l'enroulement 10 est, de préférence, de (N-1)/2N.

Les bornes E et F de l'enroulement central 20 sont, selon l'invention, destinées à recevoir le signal différentiel d'émission. Dans l'exemple de la figure 3, la borne E constitue le point milieu entre les enroulements 20 et 21, la borne F constituant le point milieu entre les enroulements 20 et 22.

Le circuit 12' d'adaptation d'impédance et d'annulation d'écho comporte, de façon classique, des résistances Ra d'attaque en transmission, formant les éléments d'adaptation d'impédance. Ainsi, la borne Tx+ est reliée à la borne E par l'intermédiaire d'une résistance Ra. De même, la borne Tx- est reliée à la borne F par l'intermédiaire d'une résistance Ra. De façon classique, les résistances Ra du circuit 12' de la figure 3 sont dimensionnées en fonction de la résistance de ligne RL et du rapport de transformation N en transmission. Par conséquent, Ra = RL/2N².

Le signal en réception est prélevé aux bornes d'extrémité de l'enroulement secondaire du transformateur 7', donc aux bornes A et B. Pour réaliser la fonction d'annulation d'écho, il est de façon classique nécessaire de soustraire, du signal reçu aux bornes A et B, l'écho du signal émis. Pour ce faire et selon l'invention, chaque borne Tx+ et Tx- de la tête d'émission 13 est reliée à une des bornes d'extrémité B, A de l'enroulement secondaire du transformateur 7', par l'intermédiaire d'un pont diviseur de tension. Par exemple, la borne Tx+ est reliée à la borne B par l'intermédiaire de résistances R1 et R2 en série. De même, la borne Tx- est reliée à la borne A par l'intermédiaire d'une autre association en série de résistances R1 et R2. Les points milieux respectifs D et C des associations en série des résistances R1 et R2 ci-dessus sont reliés aux bornes Rx- et Rx+.

La notation utilisée en relation avec la figure 3 est liée au fait que le fonctionnement différentiel rend la structure symétrique par rapport à l'enroulement central 20.

Pour obtenir l'annulation de l'écho sur les signaux reçus, les valeurs respectives des résistances R1 et R2 sont, pour un rapport de transformation N entre les enroulements 10 et 20 et pour un rapport de transformation de (N-1)/2N entre chaque enroulement 21, 22 et l'enroulement 10, telles que R2 = R1N/2.

Un avantage de la présente invention est qu'elle évite l'atténuation en réception au travers du transformateur de ligne sans nuire à l'élévation de tension en émission.

Un autre avantage de la présente invention est qu'elle minimise l'atténuation en réception liée au circuit d'annulation d'écho. En effet, comme cela a été exposé en relation avec la figure 2, le circuit d'annulation d'écho d'un système classique introduit une atténuation en réception de 2/3 en plus de celle apportée par le transformateur, soit une transmittance totale de 2/3N en réception. Selon l'invention, le circuit d'annulation d'écho apporte une atténuation de 2/(N+2), soit une transmittance totale de 2/(N+2) en réception, toujours supérieure à celle du montage de la figure 2, pour tout N supérieur à 1. On notera également que l'invention ne détériore pas la transmittance en émission.

Un autre avantage de la présente invention est que le circuit d'adaptation d'impédance et d'annulation d'écho n'est pas rendu plus complexe par l'utilisation du transformateur à triple enroulement secondaire de l'invention. En particulier, le nombre d'impédances nécessaires au circuit d'annulation d'écho est identique à celui d'un cas classique.

Un autre avantage de la présente invention est qu'elle permet de réduire la tension d'alimentation des composants d'émission, sans pour autant entraîner de diminution de tension dans le sens réception.

Un autre avantage de la présente invention est qu'elle ne modifie en rien le reste du circuit hybride de conversion. En particulier, on notera qu'il est possible, au moyen d'un transformateur de l'invention, de diviser en deux les enroulements 20 et 10 de façon à permettre l'insertion de capacités aux points milieux des primaire (qui comporte alors quatre tronçons en série) et secondaire. On obtient ainsi une fonction de transfert de type passe-haut, en émission et en réception, de façon parfaitement classique pour éliminer la bande de fréquences 0-20 kHz correspondant à la parole.

Bien entendu, la présente invention est susceptible de diverses variantes et modifications qui apparaîtront à l'homme de l'art. En particulier, bien qu'elles aient été décrites ci-dessus en relation avec une transmission de type ADSL, les caractéristiques de l'invention et notamment la dissociation des rapports de transformation d'émission et de réception peuvent procurer des avantages dans d'autres applications de transmission de données.

De plus, les dimensionnements des constituants des circuits d'adaptation d'impédance et d'adaptation d'écho de l'invention sont à la portée de l'homme du métier à partir des indications fonctionnelles données ci-dessus. En particulier, la transposition des rapports résistifs indiqués à des impédances résistives et capacitives de compromis est à la portée de l'homme du métier.

En outre, on notera que le rapport de transformation dans le sens de l'émission est lié à la tension que l'on souhaite envoyer sur la ligne et à la tension délivrée par les têtes d'émission 13 du circuit. Enfin, à titre de variante, on pourra prévoir une augmentation de tension en réception en prévoyant, pour un enroulement 10 de N spires, un nombre de spires supérieur à (N-1)/2 pour les enroulements 21 et 22. Dans ce cas, les rapports entre les résistances R1 et R2 doivent, bien entendu, être adaptés.

## Revendications

1. Transformateur asymétrique (7') entre une ligne bifilaire (1) et un équipement d'émission-réception, caractérisé en ce qu'il comprend :
- côté ligne, au moins un enroulement primaire (10) d'un premier nombre de spires ; et
- côté équipement, au moins trois enroulements secondaires (20, 21, 22) en série et dont les nombres de spires respectifs sont fonction des rapports de transformation souhaités en émission et en réception.

2. Transformateur selon la revendication 1, caractérisé en ce qu'un enroulement secondaire central (20) comporte deux bornes (E, F) propres à recevoir un signal d'émission, des bornes d'extrémité (A, B) de l'association en série des enroulements secondaires (21, 20, 22) étant propres à délivrer un signal de réception.

3. Transformateur selon la revendication 2, caractérisé en ce que l'enroulement secondaire central (20) comporte un nombre de spires fonction du rapport de transformation (N) souhaité en émission.

4. Transformateur selon la revendication 2 ou 3, caractérisé en ce que deux enroulements secondaires d'extrémité (21, 22) comportent un nombre de spires choisi pour obtenir, en réception, un rapport de transformation supérieur ou égal à l'unité.

5. Transformateur selon les revendications 3 et 4, caractérisé en ce que les rapports entre le nombre de spires de chaque enroulement d'extrémité (21, 22) et le nombre de spires de l'enroulement primaire (10) sont égaux à (N-1)/2N, où N représente le rapport entre le nombre de spires de l'enroulement primaire et le nombre de spires de l'enroulement secondaire central (20).

6. Circuit hybride de conversion 2 fils-4 fils entre une ligne de transmission bifilaire (1) et des têtes d'émission (13) et de réception (14) d'un modem, comprenant un circuit (12') d'adaptation d'impédance et d'annulation d'écho, caractérisé en ce qu'il comporte un transformateur (7') de ligne conforme à l'une quelconque des revendications 1 à 4.

7. Circuit selon la revendication 6, pourvu d'un transformateur selon la revendication 5, caractérisé en ce que sa transmittance en réception est de 2/(N+2).

8. Circuit selon la revendication 7, caractérisé en ce qu'il comporte, entre chaque borne d'extrémité (A, B) de l'association en série des enroulements secondaires (21, 20, 22) du transformateur (7') et une de deux bornes d'entrée (Rx-, Rx+) de la tête de réception (14), une première impédance (R2), ladite borne d'entrée étant reliée, par une deuxième impédance (R1), à une de deux bornes de sortie (Tx-, Tx+) de la tête d'émission (13), et le rapport entre les valeurs des première et deuxième impédances étant égal à la moitié du rapport (N) entre les nombres de spires respectifs des enroulements primaire (10) et secondaire central (20).

9. Circuit selon l'une quelconque des revendications 6 à 8, caractérisé en ce qu'il est intégré dans un terminal de ligne d'abonné numérique asymétrique.
